# EUROPEAN PATENT SPECIFICATION

(11) **EP 3 266 532 B1**
(45) Date of publication and mention of the grant of the patent: **26.08.2020**
(21) Application number: 15899452.5
(22) Date of filing: 12.11.2015
(51) Int. Cl.: B21D 22/20, B21D 51/52, B21D 51/18, B21D 19/08

(54) **DRAWING PROCESS FOR ARC CORNER CONNECTING RIB OF METAL BOX CASING**
ZIEHVERFAHREN FÜR BOGENECKVERBINDUNGSRIPPE EINES METALLKASTENGEHÄUSES
PROCÉDÉ DE TRÉFILAGE POUR NERVURE DE RACCORDEMENT D'ANGLES EN ARC D'UNE ENVELOPPE DE BOÎTE MÉTALLIQUE

(30) Priority: 29.07.2015 CN 201510455137
(43) Date of publication of application: 10.01.2018
(73) Proprietor: Fei, Xiaoming, Suzhou, Jiangsu 215000 (CN)
(72) Inventor: Fei, Xiaoming, Suzhou, Jiangsu 215000 (CN)
(74) Representative: Parker, Andrew James
(86) International application number: PCT/CN2015/094435
(87) International publication number: WO 2017/016100

(56) References cited:
- CN-A- 104 727 386
- CN-A- 105 013 917
- CN-U- 203 415 594
- CN-U- 203 686 560
- DE-U1-202004 011 972
- DE-U1-202004 013 290
- JP-A- H08 197 161

## Description

### TECHNICAL FIELD

The present invention relates to the manufacturing field of metal boxes, and more particularly, to a drawing process for an arc corner connecting rib of a metal box shell.

### BACKGROUND

Rigid shaped boxes and bags are widely used as they can keep their appearance and protect the articles therein to some extent. Especially, aluminum alloy boxes are the most popular as they can protect internal components. Furthermore, owing to the characteristics of being reasonable in design, firm in structure, attractive in appearance, easy to use and the like, the aluminum alloy boxes are widely used in industries of instruments, meters, electronics, communications, automation, sensors, precision machinery and so on, and are ideal boxes for high-grade instruments and meters. In general, existing boxes and box covers adopt integrally drawn structures in which corrugated grooves or convex strips are manufactured on the upper and lower surfaces of the boxes. However, there is no box whose side surfaces are provided with corrugated grooves or convex strips. If such a box is manufactured through one-step drawing moulding, a mould therefor is relatively complex, and demoulding in the moulding process is very difficult. Especially, it is very hard to draw a convex strip between arc corner transition portions of the box, and defective products may be produced as the possibility of mould clamping in the drawing process is high.

### SUMMARY

In order to solve one or more above problems, the present invention provides a drawing process of an arc corner connecting rib of a metal box shell.

According to an aspect of the present invention, there is provided a drawing process of an arc corner connecting rib of a metal box shell according to claim 1, wherein the drawing process comprises the following steps: preparing a rectangular metal shell whose vertex corner portions are arc corner transition portions; drawing by means of a first metal drawing mould a top face plate of the rectangular metal shell for the first time, so that a plurality of first convex strips are formed in a first area between the two arc corner transition portions of the top face plate; and drawing by means of a second metal drawing mould a side face plate and the arc corner transition portions of the rectangular metal shell obtained after the first-time drawing moulding for the second time, so that a plurality of second convex strips are formed in a second area between the two arc corner transition portions of the side face plate. The drawing process has the beneficial effects that through the first drawing, the plurality of first convex strips are formed in the first area; and through the second drawing, the plurality of second convex strips are formed in the second area between the arc corner transition portions. As there is a groove between the two second convex strips, it may be hard to demould through only the first drawing moulding, and also the second drawing moulding is performed. Therefore through two times of drawing, the arc corners can be orderly, and a stress capacity of the arc corners is improved; meanwhile, convex grain can be formed on the shell, especially at the arc corners, so that the shell is attractive and durable. Especially, demoulding is facilitated in the whole manufacturing process, the production process is simplified, and the occurrence rate of defective products is reduced.

In some embodiments, the radius of the arc corner transition portions is greater than or equal to 30 cm.

In some embodiments, the distance between the plurality of second convex strips is 1-3 cm, which has the beneficial effects that such distance makes the whole side face plate more beautiful while the stress capacity of the side face plate is improved, and demoulding after drawing is also relatively convenient.

In some embodiments, the rectangular metal shell may be made of copper, copper alloy, aluminum or aluminum alloy. The rectangular metal shell made of any of the above materials is light in weight and relatively lasting in shape keeping.

Compared with the prior art, the metal box shell obtained by the process provided by the present invention is manufactured in the manner of slow drawing at a low pressure and through two times of drawing. The arc corners are orderly and the stress capacity of the arc corners is improved; meanwhile, the convex grain can be formed on the shell, especially at the arc corners, so that the shell is attractive and durable. Especially, demoulding is facilitated in the manufacturing process, and the production process is simplified.

### BRIEF DESCRIPTION OF THE DRAWINGS

Fig. 1 is a schematic view of a three-dimensional structure of a metal box prepared by a drawing process of an arc corner connecting rib of a metal box shell according to an embodiment of the present invention;
Fig. 2 is a schematically structural view of the metal box shown in Fig. 1 in another direction;
Fig. 3 is a schematically structural view of a first drawing in the drawing process of the arc corner connecting rib of the metal box shell according to the present invention; and
Fig. 4 is a schematically structural view of a second drawing in the drawing process of the arc corner connecting rib of the metal box shell according to the present invention.

### DETAILED DESCRIPTION

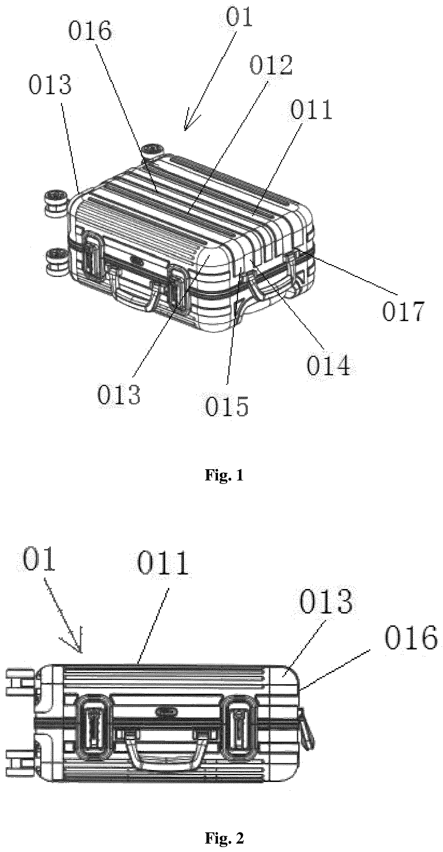

The present invention will now be further described with reference to Figs. 1-4.

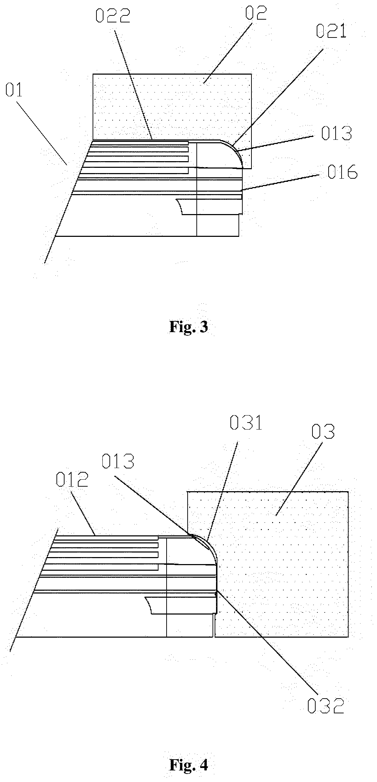

Referring to Figs. 1-4, a drawing process of an arc corner connecting rib of a metal box shell comprises the following steps: preparing a rectangular metal shell 01 whose vertex corner portions are arc corner transition portions 013; and drawing, by means of a first metal drawing mould 02, a top face plate 011 of the rectangular metal shell 01 for the first time. The rectangular metal shell 01 is a copper shell, a copper alloy shell, an aluminum shell or an aluminum alloy shell. Referring to Fig. 3, the first metal drawing mould 02 comprises a first arcuate groove 021 and a top face groove 022 connected to the first arcuate groove 021, the top face plate 011 of the rectangular metal shell 01 is placed at the top face groove 022, a part of a side face plate 017 is placed at the first arcuate groove 021, and a plurality of first grooves are formed in the top face groove 022; the top face plate 011 of the rectangular metal shell 01 is drawn under the action of pressure, so that a plurality of first convex strips 012 corresponding to the first grooves are formed in a first area 016 between the two arc corner transition portions 013 of the top face plate 011; and the first drawing is completed by using a hydraulic machine to pressurize the first metal drawing mould. The drawing process further comprises: drawing, by means of a second metal drawing mould 03, a side face plate 017 and the arc corner transition portions 013 of the rectangular metal shell obtained after the first drawing moulding for the second time. Referring to Fig. 4, the second metal drawing mould 03 comprises a second arcuate groove 031 and a side face groove 032 connected to the second arcuate groove 031, the side face plate 017 of the rectangular metal shell 01 is placed at the side face groove 032, the whole arc corner transition portions 013 are placed at the second arcuate groove 031, the side face groove 032 and the second arcuate groove 031 are respectively provided with a second groove; the side face plate 017 of the rectangular metal shell 01 is drawn under the action of pressure, so that a plurality of second convex strips 015 corresponding to the second groove are formed in a second area 014 between the two arc corner transition portions 013 of the side face plate 17; and the second drawing is completed by using the hydraulic machine to pressurize the second metal drawing mould 03. Through the first drawing, the plurality of first convex strips 012 can be formed in the first area 016; and through the second drawing, the plurality of second convex strips 015 can be formed in the second area 014 between the arc corner transition portions 013. As there is a groove between the two second convex strips 015, it may be hard to demould through the first drawing moulding, and also the second drawing forming is performed. Therefore through two times of drawing, the arc corners can be orderly, and the stress capacity of the arc corners is improved; meanwhile, convex grain can be formed on the shell, especially at the arc corners, so that the shell is attractive and durable. Especially, demoulding is facilitated in the whole manufacturing process, the production process is simplified, and the occurrence rate of defective products is reduced.

The distance between the plurality of second convex strips 015 are 1-3 cm, which has the beneficial effects that such distance makes the whole side face plate more beautiful while the stress capacity of the side face plate is improved, and demoulding after drawing is also relatively convenient.

Compared with the prior art, the metal box shell obtained by the process provided by the present invention is manufactured in the manner of slow drawing at a low pressure and through two times of drawing. The arc corners are orderly and the stress capacity of the arc corners is improved. Meanwhile, the convex grain may be formed on the shell, especially at the arc corners, so that the shell is attractive and durable. Especially, demoulding is facilitated in the manufacturing process, and the production process is simplified.

The above embodiments are only part of embodiments of the present invention. It should be noted that other modifications and improvements may be made by those skilled in the art without departing from scope of the present invention as defined by the appended claims.

## Claims

1. A drawing process for an arc corner connecting rib of a metal box shell, the drawing process comprising the following steps:
preparing a rectangular metal shell (01) whose vertex corner portions are arc corner transition portions (013);
drawing by means of a first metal drawing mould (02) a top face plate (011) of the rectangular metal shell (01) for the first time, so that a plurality of first convex strips (012) are formed in a first area (016) between the two arc corner transition portions (013) of the top face plate (011); and
drawing by means of a second metal drawing mould (03) a side face plate (017) and the arc corner transition portions (013) of the rectangular metal shell (01) obtained after the first-time drawing moulding for the second time, so that a plurality of second convex strips (015) are formed in a second area (014) between the two arc corner transition portions (013) of the side face plate (017).

2. The drawing process for the arc corner connecting rib of the metal box shell of claim 1, wherein the radius of the arc corner transition portions (013) is greater than or equal to 30 cm.

3. The drawing process for the arc corner connecting rib of the metal box shell of claim 1, wherein the distance between the plurality of second convex strips (015) is 1-3 cm.

4. The drawing process for the arc corner connecting rib of the metal box shell of claim 1, wherein the rectangular metal shell (01) is a copper shell, a copper alloy shell, an aluminum shell or an aluminum alloy shell.

## Patentansprüche

1. Ziehverfahren für eine Bogeneckverbindungsrippe eines Metallkastengehäuses, wobei das Ziehverfahren die folgenden Schritte umfasst:
Vorbereiten eines rechteckigen Metallgehäuses (01), dessen Scheiteleckabschnitte Bogeneckübergangsabschnitte (013) sind;
Ziehen einer oberen Stirnplatte (011) des rechteckigen Metallgehäuses (01) mittels einer ersten Metallziehform (02) zum ersten Mal, so dass mehrere erste konvexe Streifen (12) in einem ersten Bereich (016) zwischen den beiden Bogeneckübergangsabschnitten (013) der oberen Stirnplatte (011) gebildet werden; und
Ziehen einer Seitenfrontplatte (017) und der Bogeneckübergangsabschnitte (013) des rechteckigen Metallsgehäuses (01) mittels einer zweiten Metallziehform (03), die nach dem ersten Ziehformen zum zweiten Mal erhalten wurden, so dass mehrere zweite konvexe Streifen (015) in einem zweiten Bereich (014) zwischen den beiden Bogeneckübergangsabschnitten (013) der Seitenfrontplatte (017) gebildet werden.

2. Ziehverfahren für die Bogeneckverbindungsrippe des Metallkastengehäuses nach Anspruch 1, wobei der Radius der Bogeneckübergangsabschnitte (013) größer oder gleich 30 cm ist.

3. Ziehverfahren für die Bogeneckverbindungsrippe des Metallkastengehäuses nach Anspruch 1, wobei der Abstand zwischen den mehreren zweiten konvexen Streifen (015) 1-3 cm beträgt.

4. Ziehverfahren für die Bogeneckverbindungsrippe des Metallkastengehäuses nach Anspruch 1, wobei das rechteckige Metallgehäuse (01) ein Kupfergehäuse, ein Kupferlegierungsgehäuse, ein Aluminiumgehäuse oder ein Aluminiumlegierungsgehäuse ist.

## Revendications

1. Processus d'étirage pour une nervure de liaison de coin en arc d'une coque de coffre métallique, le processus d'étirage comprenant les étapes suivantes consistant à :
préparer une coque métallique rectangulaire (01) dont les parties de coin de sommet sont des parties de transition de coin en arc (013) ;
étirer au moyen d'un premier moule d'étirage de métal (02) une plaque de face supérieure (011) de la coque métallique rectangulaire (01) pour la première fois, de sorte qu'une pluralité de premières bandes convexes (012) soient formées dans une première zone (016) entre les deux parties de transition de coin en arc (013) de la plaque de face supérieure (011) ; et
étirer au moyen d'un deuxième moule d'étirage de métal (03) une plaque de face latérale (017) et les parties de transition de coins en arc (013) de la coque métallique rectangulaire (01) obtenue après le premier moulage d'étirage pour la deuxième fois, de sorte qu'une pluralité de deuxièmes bandes convexes (015) soient formées dans une deuxième zone (014) entre les deux parties de transition de coin en arc (013) de la plaque de face latérale (017).

2. Processus d'étirage pour la nervure de liaison de coins en arc de la coque de coffre métallique selon la revendication 1, dans lequel le rayon des parties de transition de coins en arc (013) est supérieure ou égale à 30 cm.

3. Processus d'étirage pour la nervure de liaison de coins en arc de la coque de coffre métallique selon la revendication 1, dans lequel la distance entre la pluralité de deuxièmes bandes convexes (015) est de 1-3 cm.

4. Processus d'étirage pour la nervure de liaison de coins en arc de la coque de coffre métallique selon la revendication 1, dans lequel la coque métallique rectangulaire (01) est une coque en cuivre, une coque en alliage de cuivre, une coque en aluminium ou une coque en alliage d'aluminium.
